(19) Europäisches Patentamt / European Patent Office / Office européen des brevets

(11) **EP 1 650 282 B1**

(12) **EUROPEAN PATENT SPECIFICATION**

(45) Date of publication and mention
of the grant of the patent:
**29.12.2010 Bulletin 2010/52**

(51) Int Cl.:
*C09J 175/04* (2006.01)     *C09J 153/00* (2006.01)

(21) Application number: **05022031.8**

(22) Date of filing: **10.10.2005**

(54) **Reactive hot melt adhesive with block acryclic copolymer**

Reaktiver Heissschmelzkleber mit Acryl-blockcopolymeren

Colle thermofusible autoadhésive reactive avec un copolymérisat en masse acrylique

(84) Designated Contracting States:
**CH DE FR GB LI NL PL**

(30) Priority: **19.10.2004 US 968658**

(43) Date of publication of application:
**26.04.2006 Bulletin 2006/17**

(73) Proprietor: **Henkel AG & Co. KGaA**
**40589 Düsseldorf (DE)**

(72) Inventors:
• **Good, David J.**
  **Somerville**
  **New Jersey 08876 (US)**
• **Paul, Charles**
  **Madison**
  **New Jersey 07940 (US)**
• **Chu, Wayne K.**
  **Basking Ridge**
  **New Jersey 08807 (US)**
• **Slark, Andrew**
  **Wokingham**
  **Berkshire RG40 4YD (GB)**
• **Schmidt, Scott Charles**
  **West Chester**
  **Pennsylvania 19380 (US)**
• **Macy, Noah**
  **Royersford**
  **Pennsylvania 19468 (US)**
• **Callais, Peter Anthony**
  **Collegeville**
  **Pennsylvania 19426 (US)**

(56) References cited:
DE-A1- 10 157 695     US-A- 5 679 762
US-A1- 2003 010 442     US-B1- 6 342 563

Remarks:
The file contains technical information submitted after the application was filed and not included in this specification

**Description**

The invention relates to hot melt adhesives, in particular reactive hot melt adhesives having improved green strength and open time.

**BACKGROUND OF THE INVENTION**

Hot melt adhesives are solid at room temperature but, upon application of heat, melt to a liquid or fluid state in which form they are applied to a substrate. On cooling, the adhesive regains its solid form. The hard phase(s) formed upon cooling the adhesive imparts all of the cohesion (strength, toughness, creep and heat resistance) to the final adhesive. Curable hot melt adhesives, which are also applied in molten form, cool to solidify and subsequently cure by a chemical crosslinking reaction. An advantage of hot melt curable adhesives over traditional liquid curing adhesives is their ability to provide green strength upon cooling prior to cure. Green strength as referred to in this document reflects the temperature dependent profile of bond strength after formation of a bond from two or more substrate, but prior to curing of the adhesive. Open time as used in this document indicates the maximum time after application of molten adhesive to a first substrate that a second substrate can be contacted to the cooling adhesive and create a suitably strong bond between the substrates.

The majority of reactive hot melts are moisture-curing urethane adhesives. These adhesives consist primarily of isocyanate terminated polyurethane prepolymers that react with surface or ambient moisture in order to chain-extend, forming a new polyurethane/urea polymer. Polyurethane prepolymers are conventionally obtained by reacting diols with diisocyanates.

Pure diols are favored for use, instead of polyols with higher functionality, to avoid excessive branching that can lead to poor pot stability. Methylene bisphenyl diisocyanate (MDI) is favored over lower molecular weight isocyanates to minimize volatility. Cure is obtained through the diffusion of moisture from the atmosphere or the substrates into the adhesive and subsequent reaction. The reaction of moisture with residual isocyanate forms carbamic acid. This acid is unstable, decomposing into an amine and carbon dioxide. The amine reacts rapidly with isocyanate to form a urea. The final adhesive product is a crosslinked material held together primarily through urea groups and urethane groups. <new page 2 a>

Despite advances in the art, there remains a need for improvements in reactive hot melt technology to expand the application of such adhesives and their effectiveness in such applications. The present invention addresses this need and specifically focuses on increased pre-cure bond strength and improved machining characteristics.

SUMMARY OF THE INVENTION

The invention provides moisture curable reactive hot melt adhesive compositions that have improved green strength and open time.

One aspect of the invention is directed to a urethane hot melt adhesive composition comprising an isocyanate-terminated prepolymer, an effective amount of a block acrylic copolymer and, optionally, a polyether diol, polyester diol and/or plastic. The block acrylic copolymer may contain some amount of a functional monomer situated in one or more block segments that is capable of reaction with isocyanate terminated prepolymer.

Another embodiment of the invention is directed to a method of improving the green strength of a urethane hot melt adhesive comprising adding an effective amount of a block acrylic copolymer to a reactive hot melt adhesive formulation comprising an isocyanate-terminated prepolymer.

A method for bonding materials together comprises applying the reactive hot melt adhesive composition of the invention in a liquid form to a first substrate, bringing a second substrate in contact with the composition applied to the first substrate, and subjecting the applied composition to conditions which will allow the composition to cool and cure to an irreversible solid form, said conditions comprising moisture.

**BRIEF DESCRIPTION OF THE DRAWINGS**

**Figure 1** is a graph of the dynamic peel of example compositions plotted as a function of temperature.
**Figure 2** is a graph of the dynamic mechanical analysis of polymers C and D from the list in Table 1.

**DETAILED DESCRIPTION OF THE INVENTION**

All percents are percent by weight of the adhesive composition, unless otherwise stated.

It has now been discovered that high green strength reactive hot melt adhesives may be prepared using block acrylic copolymers. The adhesives of the invention have improved green strength, adhesion, machining properties, and are resistant to hydrolysis under both alkaline and acidic conditions. The physical crosslinking and elasticity exhibited by block acrylic copolymers contained in reactive hot melt adhesives of this invention provide precure bond strength, low energy surface adhesion, and machining properties superior to current adhesives know to those skilled in the art of reactive hot melts. Furthermore, acrylic block copolymers offer significant higher compatibility with a variety of traditional polar reactive hot melt components such as polyether polyols, random acrylic copolymers, polyester polyols, and a variety of ethylenic homopolymers and copolymers like ethylene vinyl acetate and ethylene n-butyl acrylate relative to styrene based block copolymers systems taught in the prior art that have compatibility with low polarity components (US 4,820,368). The ability to incorporate functional groups, capable of reaction with isocyanate containing compounds, on the block acrylic copolymers of this invention facilitates a further increase in green strength over conventional reactive hot melts.

The moisture curable, hot melt polyurethane adhesives of the invention may be prepared through the combination of one or more acrylic block copolymers with an isocyanate-containing compound at a temperature of from about 66°C (150°F) to about 149°C (300°F). Moisture is typically excluded from the reaction using dry chemicals and conducting the reaction under vacuum or the presence of an anhydrous gas blanket. The adhesives of the invention comprise an isocyanate, MDI being preferred, from about 0.1 to about 90 wt % and preferably from about 0.1 to about 95 wt % of an acrylic block copolymer. The adhesive of this invention can further comprise optional components including from 0 to about 90 wt % of a polyol, from 0 to about 80 wt % of a tackifier, from 0 to about 75 wt % of a plasticizer or diluent, from 0 to about 50 wt % of a thermoplastic polymer, and from 0 to about 20 wt % of an additive.

ISOCYANATE-terminated prepolymer

Any suitable compound, which contains two or more isocyanate groups, may be used for preparing the isocyanate-terminated prepolymers of this invention. Typically from about 0.1 to about 90 wt % and preferably from about 0.1 to about 30 wt % of an isocyanate is used.

Organic polyisocyanates, which may be used to practice the invention, include alkylene diisocyanates, cycloalkylene diisocyanates, aromatic diisocyanates and aliphatic-aromatic diisocyanates. Specific examples of suitable isocyanate-containing compounds include, but are not limited to, ethylene diisocyanate, ethylidene diisocyanate, propylene diisocyanate, butylene diisocyanate, trimethylene diisocyanate, hexamethylene diisocyanate, toluene diisocyanate, cyclopentylene-1, 3-diisocyanate, cyclo-hexylene-1,4-diisocyanate, cyclohexylene-1,2-diisocyanate, 4,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, dichlorohexamethylene diisocyanate, furfurylidene diisocyanate, 1-chlorobenzene-2,4-diisocyanate, 4,4',4''-triisocyanatotriphenylmethane, 1,3,5-triisocyanato-benzene, 2,4,6-triisocyanato-toluene and, 4,4'-dimethyldiphenyl-methane-2,2',5,5tetratetraisocyanate. While such compounds are commercially available, methods for synthesizing such compounds are well known in the art. Preferred isocyanate-containing compounds are methylenebisphenyldiisocyanate (MDI) and its polymeric analog as described in "The Polyurethanes Book", D. Randall and S. Lee, eds., John Wiley & Sons, 2002, page 84, isophoronediisocyanate (IPDI), hydrogenated methylenebisphenyldiisocyanate (HMDI) and toluene diisocyanate (TDI).

Preferably, the polyisocyanate is reacted in excess with a polyol to produce an isocyanate-terminated prepolymer. When no polyol is used a polyamino or a polymercapto-containing compound is used.

BLOCK COPOLYMER

Block copolymer, as used herein, is intended to include those polymers that contain at least one acrylic or methacrylic acid alkyl ester monomer. Adhesive of this invention contain from about 0.1 to about 95 wt % of a block copolymer. Examples of useful block copolymers include those of the formula -A-B- diblocks, -A-B-A- triblocks, $(-A-B-)_n$ multiblocks, and $(-A-B-)_n-X_m$. Particularly preferred are block copolymers of the formula -[A1]-[B]-[A2]-. In the above representative formulations, A, A1 and A2 each represents a hard polymer block having a glass transition temperature (Tg) of greater than about 30°C, preferably greater than 80°C, most preferably greater than 110°C, as determined by differential scanning calorimetry (DSC), B represents a polymer block having a Tg of less than about 20°C, preferably less than 0°C, most preferably less than -20°C as determined by DSC, and X represents a multifunctional coupling agent such as silicon tetrachloride, dibromoethane and tris(nonyl phenyl) phospite. Alternatively a block-copolymer as described in claim 10 may be used. Block copolymers that may be used in the practice of the invention will generally be multiblock polymers wherein less than about 50 weight % of the polymer comprises one or more hard blocks. The block copolymers preferably contain some amount of a monomer that is capable of reacting with compounds containing isocyanate functionality. Functional monomers capable of reacting with isocyanates include acid, hydroxy, amine, isocyanate, and thio functional monomers. It is advantageous to have a gradient segment of the monomers between block transitions. The length of the gradient segment changes the block phase separation properties of the polymer and can be tailored to impart different adhesive properties suitable for various bonding applications.

The Tg of the acrylic blocks can be determined by differential scanning calorimetry (DSC) conducted at a heating rate of 20.0 °C /minute with about 10 mg samples. The Tg is calculated as the midpoint between the onset and endpoint of heat flow change corresponding to the glass transition on the DSC heat capacity heating curve. The use of DSC to determine Tg is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990.

Suitable examples of A1 and A2 polymer blocks include polymers or copolymers derived from acrylic or methacrylic acid alkyl ester monomers such as methyl methacrylate, ethyl methacrylate, n-propyl methacrylate, isobutyl methacrylate, isobornyl acrylate, isobornyl methacrylate, isobutyl methacrylate, t-butyl methacrylate, cyclohexyl methacrylate, and combinations thereof. Suitable B polymer blocks include polymers or copolymers derived from acrylic or methacrylic acid alkyl ester monomers such as methyl acrylate, ethyl acrylate, n-propyl acrylate, isobutyl acrylate, n-butyl acrylate, n-butylmethacrylate, n-propyl acrylate, isobutyl acrylate, sec-butyl acrylate, t-butyl acrylate, amyl acrylate, isoamyl acrylate, n-hexyl acrylate, 2-ethylhexyl acrylate, lauryl acrylate, iso-octyl acrylate, decyl methylacrylate and combinations thereof. Polymer block B will preferably be present in amounts of more than about 50 wt %. In a particularly preferred embodiment, A1 and A2 is methyl methacrylate and B is n-butyl acrylate. HEMA (2-hydroxyethyl methacrylate) is a monomer particularly preferred to be incorporated in the range of about two or more monomer units per block copolymer chain. The HEMA facilitates reaction of the block copolymer with isocyanate through its hydroxyl functionality.

It is understood that the same acrylic monomers may be included in both the hard and soft blocks, and that one or more other copolymerizable non-acrylic or non-methacrylic acid alkyl ester monomers may be used as minor components in the preparation of the polymeric acrylic blocks. Useful copolymerizable olefinic monomers include but are not limited to, acrylic acid, methacrylic acid, vinyl esters, vinyl ethers, styrene monomers, and acrylamides, methacrylamides, fumarates, maleates, acrylonitrile, ethylene and derivatives thereof. These other comonomers may be present in amounts of up to about 25% of each block, preferably less than 10%, provided they do not interrupt the clean phase separation between the hard and soft blocks upon cooling.

Methods of preparing acrylic block copolymers are known in the art. Block copolymers for use in the practice of the invention may be synthesized by controlled radical polymerization in the presence of a nitroxide radical mediator as described in U.S. Patent No. 6,255,448 or EP1142913, by anionic polymerization as described in Japanese Kokai 11-30222617, all of which are incorporated by reference herein, by free radical polymerization as described by P. Mancinelli, Materiaux et Techniques, March-April 1990, pp. 41-46, by polyfunctional chain transfer agents such as described by in U.S. Patent No. 5,679,762, by iniferter polymerization as described in EP 0 349 270 B1 and/or by free radical retrograde precipitation, as described in copending commonly assigned U.S. Patent No. 6,881,805. Block acrylic copolymers containing gradient segments at the block transitions are preferred to be made through controlled radical polymerization as described in the international publication numbered WO2004055071, which is incorporated by reference herein. Particularly preferred are acrylic block copolymers prepared by controlled radical polymerization or anionic polymerization.

POLYOL

The adhesive compositions of this invention optionally contain a polyol to produce an isocyanate-terminated polyurethane prepolymer. The polyol is typically used in an amount of between 0 to about 90 wt %, more preferably between 10 and 50 wt % and is reacted with an excess of reactive isocyanate equivalents. Embodiments of this invention containing nonfunctional acrylic block copolymers preferably contain one or more polyols. In this instance the prepolymer is prepared by the polymerization of a polyisocyanate with one or more polyols, preferably a diisocyanate and a diol, where the nonfunctional block copolymer is preferably present in the mixing vessel, however can optionally be blended prior to or after prepolymer formation. Adhesive compositions with functional block acrylics copolymers optionally contain one or more polyol components that can be introduced prior, during, or post reaction of the block acrylic and isocyanate components. The polyols used include polyhydroxy ethers (substituted or unsubstituted polyalkylene ether glycols or polyhydroxy polyalkylene ethers), polyhydroxy polyesters, the ethylene or propylene oxide adducts of polyols and the monosubstituted esters of glycerol, and "polymer polyols" (i.e., graft polyols containing a proportion of a vinyl monomer, polymerized in situ, e.g., Niax Polyol 34-28) as well as mixtures thereof.

Suitable polyether polyols include linear and/or branched polyethers having plural numbers of ether bondings and at least two hydroxyl groups, and contain substantially no functional group other than the hydroxyl groups. Examples of the polyether polyol may include polyoxyalkylene polyol such as polyethylene glycol, polypropylene glycol, polytetramethylene glycol, polybutylene glycol and the like. Further, a homopolymer and a copolymer of the polyoxyalkylene polyols or mixtures thereof may also be employed. Particularly preferable copolymers of the polyoxyalkylene polyols may include an adduct of at least one compound selected from the group consisting of ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane, triethanolamine, triisopropanolamine; with at least one compound selected from the group consisting of ethylene oxide, propylene oxide and butylene oxide. Examples of commercially available polyols which may be used in the practice of the invention include polyethers such as ARCOL PPG 2025 (Bayer), PolyG 20-56 (Arch) and Pluracol P-2010 (BASF).

Suitable polyester polyols are formed from the condensation of one or more polyhydric alcohols having from about 2 to about 15 carbon atoms with one or more polycarboxylic acids having from about 2 to about 14 carbon atoms. Examples of suitable polyhydric alcohols include ethylene glycol, propylene glycol such as 1,2-propylene glycol and 1,3-propylene glycol, glycerol, pentaerythritol, trimethylolpropane, 1,4,6-octanetriol, butanediol, pentanediol, hexanediol, dodecanediol, octanediol, chloropentanediol, glycerol monallyl ether, glycerol monoethyl ether, diethylene glycol, 2-ethylhexanediol, 1,4-cyclohexanediol, 1,2,6-hexanetriol, 1,3,5-hexanetriol, 1,3-bis-(2-hydroxyethoxy)propane and the like. Commercially available semicrystalline polyester polyols useful in the invention include, for example, Dynacoll 7360 (Creanova), Fomrez 66-32 (Crompton) and Rucoflex S-105-30 (Bayer). Examples of polycarboxylic acids include phthalic acid, isophthalic acid, terephthalic acid, tetrachlorophthalic acid, maleic acid, dodecylmaleic acid, octadecenylmaleic acid, fumaric acid, aconitic acid, trimellitic acid, 3,3'-thiodipropionic acid, succinic acid, adipic acid, malonic acid, glutaric acid, pimelic acid, sebacic acid, cyclohexane-1,2-dicarboxylic acid, 1,4-cyclohexadiene-1,2-dicarboxylic acid, 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Preferred polycarboxylic acids are the aliphatic and cycloaliphatic dicarboxylic acids containing about 14 or less carbon atoms and the aromatic dicarboxylic acids containing about 14 or less carbon atoms.

Isocyanate-terminated prepolymers of this invention can optionally be prepared by the reaction of a polyisocyanate with a polyamino or a polymercapto-containing compound such as diamino polypropylene glycol or diamino polyethylene glycol or polythioethers such as the condensation products of thiodiglycol either alone or in combination with other glycols such as ethylene glycol, 1,2-propylene glycol or with other polyhydroxy compounds disclosed above. Further, small amounts of low molecular weight dihydroxy, diamino, or amino hydroxy compounds may be used such as saturated and unsaturated glycols, e.g., ethylene glycol or condensates thereof such as diethylene glycol, triethylene glycol, and the like; ethylene diamine, hexamethylene diamine, N-N-diisopropylethylene diamine, JEFFLINK™ 754 and the like; ethanolamine, n-methylethanolamine, propanolamine, N-methyldiethanolamine, and the like. Hydroxyl functionality is most preferred for reaction with isocyanate to form urethane prepolymers and is described in the most detail above.

In accordance with one embodiment of the invention, a hydroxy functional acrylic block copolymer may serve as the polyol component, in which case, no additional polyol need be added to the reaction. In one embodiment of this invention it is preferable to synthesize the reactive urethane hot melt prepolymer without any polyester polyol or component of equivalent crystallinity. Polyester polyol is typically used by those skilled in the art of reactive hot melts as a crystalline component that balances open time, set time, and green strength of the precured adhesive. When a conventional reactive hot melt approaches the crystalline temperature of the polyester component(s) the adhesive green strength increases substantially due to crystalline strength, however the adhesive is no longer open to bonding and is considered set. In this way the green strength and open/set time of adhesives that employ polyester polyol are effectively linked. The high Tg segment of a block acrylic copolymer offers an alternate method of controlling green strength without necessarily influencing the open and set time. When a reactive adhesive with block acrylic polymer drops below the temperature of the high Tg segment the cohesive strength increases substantially leading to high green strength. In the case of block acrylics the adhesive may still remain open to bonding below the Tg temperature of the high Tg block because the low Tg block provides elastic characteristics suitable for bonding substrates. While in some instances it might be advantages to incorporate some crystalline polyester components, this invention provides a method to eliminate polyesters and increase green strength and open time properties.

TACKIFIER

The adhesive compositions of this invention are optionally tackified. The tackifier component will usually be present in an amount of from 0 wt % to about 80 wt %, more preferably from about 10 wt % to about 50 wt %, even more preferably from about 20 wt % to about 40 wt %. The tackifying resins normally have ring and ball softening points as determined by ASTM method E28 between about 70°C and 150°C, more preferably between about 80°C and 120°C, and most preferably between about 90°C and 110°C. Mixtures of two or more of the below described tackifying resins may be required for some formulations.

Useful tackifiers include any compatible resins or mixtures thereof such as (1) natural or modified rosins such, for example, as gum rosin, wood rosin, tall-oil rosin, distilled rosin, hydrogenated rosin, dimerized rosin, and polymerized rosin; (2) glycerol and pentaerythritol esters of natural or modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natural terpenes, e.g., styrene/terpene and alpha methyl styrene/terpene; (4) polyterpene resins having a softening point, as determined by ASTM method E28,58T, of from about 80°C to 150°C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof, for example, as the resin product resulting from the condensation, in an acidic medium, of a bicyclic terpene and phenol; (6) aliphatic petroleum hydrocarbon resins having a Ball and Ring softening point of from about 70°C to 135°C; the latter resins resulting from the polymerization of monomers consisting of primarily of olefins and diolefins; also included are the hydrogenated aliphatic petroleum hydrocarbon resins; (7) alicyclic petroleum hydrocarbon resins and the hydrogenated derivatives thereof; (8) aliphatic/ aromatic or cycloaliphaticIaromatic copolymers and their hydrogenated derivatives; and (9) aromatic resins. The desirability and selection of the particular tackifying agent is, in large part, dependent upon the specific block copolymer employed.

Preferred tackifiers are synthetic hydrocarbon resins. Non-limiting examples include aliphatic olefin derived resins such as those available from Goodyear under the Wingtack® tradename and the Escorez® 1300 series from Exxon. A common $C_5$ tackifying resin in this class is a diene-olefin copolymer of piperylene and 2-methyl-2-butene having a softening point of about 95°C. This resin is available commercially under the tradename Wingtack 95. Most preferable are aromatic hydrocarbon resins that are $C_9$ aromatic/aliphatic olefin-derived and available from Startomer and Cray Valley under the trade name Norsolene and from Rutgers series of TK aromatic hydrocarbon resins. Norsolene M1090 is a low molecular weight thermoplastic hydrocarbon polymer where the aliphatic portion is derived largely from alpha-pinene which has a ring and ball softening point of 95-105°C and is commercially available from Cray Valley. These $C_9$ based hydrocarbon resins are particularly useful when synthesized with an alpha-pinene, styrene, terpene, alpha-methylstyrene, and/or vinyl toluene, and polymers, copolymers and terpolymers thereof, terpenes, terpene phenolics, modified terpenes, and combinations thereof. The increased aromatic structure of these resins produce more polar character in the resins that contributes toward the desired compatibility and performance of the adhesives of this invention. One examples of commercially available aromatic tackifier is KRISTALEX 3100, a low molecular weight thermoplastic hydrocarbon polymer derived largely from alphamethylstryene which has a Ring and Ball softening point of 97°C to 103°C available from Eastman.

PLASTICIZER

Various plasticizing agents or diluents optionally present in the adhesive composition in amounts from 0% to about 75% by weight, preferably in amounts of from about 0% to about 45% by weight of the adhesive composition. Suitable diluents will preferably be primarily compatible with the soft (B) block of the acrylic block copolymer. Diluents are liquid or semisolid materials with a Tg, as determined by DSC, below room temperature. Several of the plasticizing agents or diluents in this section serve a dual purpose wherein they have hydroxyl groups suitable for urethane formation in the prepolymer. Suitable diluents include aliphatic esters such as phthalic acid esters, adipic acid esters, sebacic acid esters and azelaic acid esters, as well as their random or block copolymers. Paraffins such as chlorinated paraffin can also function as plasticizing agents. Phthalic acid esters such as dibutyl phthalate, di-n-decyl phthalate, bis-2-ethyhexyl phthalate and diisodecyl phthalate, and ditridecyl adipate are additional suitable diluents for use in the practice of this invention. The most preferred diluents for this invention di-tridecyl adipate.
Additional suitable diluents include plasticizing or extending oils and liquid tackifiers. Extending oils include olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. Suitable oligomers include polypropylenes, polybutenes, hydrogenated polyisoprene, hydrogenated polybutadiene, or the like having average molecular weights between about 350 and about 10,000. Examples of oils suitable for use herein include LUMINOL T350 and KAYDOL OIL, both available from Witco Corporation. Naphthenic oils, such as Calsol 5550, available from Calumet are also useful. Liquid tackifiers are those of similar chemical structures listed in the above section however there softening points are below room temperature. Particularly useful liquid tackifiers include rosin derivatives such as rosin alcohol, the methyl ester of rosin and the rosin ester formed by esterifying diethylene glycol with rosin. Other examples are low molecular weight hydrocarbon resins such as Wingtack 10, available from Goodyear, and Esorez 2520 available from Exxon Chemical.

THERMOPLASTIC POLYMER

The reactive hot melt adhesive composition of the invention optionally contains from 0 to about 50 wt % a compatible thermoplastic polymer which cooperates with the other adhesive components to provide initial green strength and cured strength to the inventive compositions. Preferably, the thermoplastic polymer composition is selected to be of similar polarity and compatible with the urethane components, acrylic block copolymer, and other optional components like tackifiers or diluents. The preferred optional thermoplastic copolymer component of this invention includes homopolymer or random copolymers of olefinic monomers including acrylic acid, methacrylic acid, vinyl esters (vinyl acetate and vinyl propionate), vinyl ethers, styrene, acrylamides, methacrylamides, fumarates, maleates, acrylonitrile, ethylene, propylene and derivatives thereof: Most preferred are homopolymer or random copolymers of acrylic and methacrylic acid alkyl ester monomers such as copolymers of methyl methacrylate and n-butyl methacrylate or ethylene vinyl monomers such as an ethylene vinyl acetate copolymer. Preferably copolymers of vinyl monomer comprise one or more acrylate monomer or a vinyl ester monomer of a carboxylic acid compound. Acrylate monomers that can be used in the optional thermoplastic homopolymer or random copolymer component of the invention include those listed in the above section on block acrylic copolymers. A preferred ethylene vinyl acrylate copolymer is ethylene n-butylacrylate which includes about 20-50% butylacrylate.

The optional thermoplastic polymer component of this invention can comprise a functional monomer that reacts with isocyanate and participate in formation of the urethane prepolymer. Functional monomers capable of reactiong with isocyanates include, without limitation acid, hydroxy, amine, isocyanate, and thio functional monomers. When this invention employs a functional thermoplastic polymer component it is preferred to have two or more functional monomer units per polymer chain.

ADDITIVES

Other additives conventionally used in hot melt adhesives to satisfy different properties and meet specific application requirements can optionally be included from 0 wt % to about 20 wt % in the adhesive composition of this invention. Such additives include, for example, diluent fillers, pigments, curing catalysts, dissociation catalysts, antioxidants, flow modifiers, dyestuffs, flame retardants, inhibitors, UV absorbers, adhesion promoters, stabilizers, and waxes which may be incorporated in minor or larger amounts into the adhesive formulation, depending on the purpose.

MANUFACTURE

While the choice of components, order of addition, and addition rate can be left to the skilled adhesives chemist, generally the reactive hot melt urethane adhesives of this invention can be made by preparing the block acrylic copolymer (s) and blending any optional ingredients such as polyol or tackifier, if necessary, into a suitable reaction vessel at elevated temperatures, typically in the range of about 66°C (150°F) to 149°C (300°F). The isocyanate compound is then introduced into the reaction vessel at elevated reaction temperatures, typically in the range of about 66°C (150°F) to 149°C (300°F). Moisture is typically excluded from reaction using dry chemicals and conducting the reaction under vacuum or the presence of an anhydrous gas blanket.

METHODS

A method for bonding articles together comprises applying the reactive hot melt adhesive composition of the invention in a liquid melt form to a first article, bringing a second article in contact with the composition applied to the first article, and subjecting the applied composition to conditions which will allow the composition to cool and cure to a composition having an irreversible solid form, said conditions comprising moisture. The composition is typically distributed and stored in its solid form, and is stored in the absence of moisture. When the composition is ready for use, the solid is heated and melted prior to application. Thus, this invention includes reactive polyurethane hot melt adhesive compositions in both its solid form, as it is typically to be stored and distributed, and its liquid form, after it has been melted, just prior to its application.

A method for bonding articles together exploits the pressure sensitive adhesive properties of certain moisture cure block copolymer urethane adhesive compositions by applying, with pressure, the reactive hot melt in a solid form to a first article, pressing a second article in contact with the composition applied to the first article, and subjecting the applied composition to pressure and conditions suitable to produce cure to irreversible solid form.

After application, to adhere articles together, the reactive hot melt adhesive composition is subjected to conditions that will allow it to solidify and cure to a composition that has an irreversible solid form. Irreversible solid form means a solid form comprising polyurethane polymers extended from the aforementioned polyurethane prepolymers. The composition having the irreversible solid form typically can withstand temperatures of up to 150°C. Solidification (setting) occurs when the molten hot melt adhesive is cooled by subjected to room temperature. The reactive hot melt urethane adhesive compositions of the invention can be cured to an irreversible solid form in the bond line using a variety of mechanisms. The curing reaction occurs between a compound having an available active hydrogen atom and the NCO groups of the polyurethane precursor. A variety of reactive compounds having free active hydrogens are known in the art including water, hydrogen sulfide, polyols, ammonia, and other active compounds. The curing reaction of this invention relies on the presence of ambient moisture.

The reactive hot melt compositions of the invention are useful for bonding articles composed of a wide variety of substrates (materials), including but not limited to wood, metal, polymeric plastics, glass and textiles. As such, these adhesives find particular use in applications such as use in water towers, for bonding to exterior surfaces, bonding to wood with high levels of pitch and e.g., in marine and automotive applications. Other non-limiting uses include textile bonding applications (carpet and clothing), use in the manufacture of footwear (shoes), use as a glazing/backbedding compound in the manufacture of windows, use in the manufacture of doors including entry doors, garage doors and the like, use in the manufacture of architectural panels, use in bonding components on the exterior of vehicles, and the like.

The invention is further illustrated by the following examples.

## EXAMPLES

In the Examples that follow, the following tests were used to determine viscosity and dynamic peel rate.

Viscosity:

Brookfield Viscometer with Thermosel heating unit, spindle 27

Dynamic Peel:

A 152.4 $\mu$m (6 mil) film of the adhesive was applied to a glass plate, preheated at 120°C. A strip of vinyl (16mm wide, 178 $\mu$m (7 mil) thick) with a hole punched near one end was applied over the adhesive. The plate is inverted and, at several temperature intervals, a 103g weight was applied to the hole in the vinyl for 10-60 seconds. The peel rate at these intervals was calculated. This test provides peel data indicating the bond strength as the adhesive cools from application temperature to room temperature.

Open Time:

A 127 $\mu$m (5 mil) adhesive film is drawn out on a piece of clear ponderosa pine at 121°C (250°F). Pieces of high pressure laminate (HPL) are bonded to a one inch by one inch area of the coated adhesive film at different time intervals. The maximum time interval when the HPL can be bonded then subsequently cured and pulled in shear mode by an Instron at 1.27 cm (0.5 inches) per minute to induce substrate failure of the pine board is recorded as the open time.

Example 1. Reactive hot melt adhesives having the formulations shown in Table 1 (% by weight) were prepared. All the polyols and block acrylic polymers (reactive or not) were added to melt and mix under vacuum until homogeneous and free of moisture. Then MDI was added and polymerization allowed to proceed with mixing under vacuum until reaction is complete. The resulting pre-polymer was then placed into a container under a dry nitrogen headspace to prevent exposure to moisture. All the polymer samples in this example have butylacrylate (BA) mid-blocks and methylmethacrylate (MMA) end-blocks. Hydroxy functional samples in this example were synthesized with hydroxyethylmethacrylate monomer. A comparative sample representing conventional reactive hot melt technology was prepared by the same methods and will be referred to as Sample G. The comparative Sample G composition is taken from U.S. Patent No. 5,866,656(Table 1 Sample D). Comparative Sample G comprises polypropylene glycol (polyether component), 1,6-hexanedoil neopentyl glycol adipate (polyester component), random acrylic copolymer, and a diisocyanate.

Table 1. Formulations of Reactive Hot Melt Adhesives Containing Block Acrylic Copolymers

| | Commercial Manufacturer | SAMPLE | | | | | | |
|---|---|---|---|---|---|---|---|---|
| | (Trade Name) | A | B | C | D | D-2 | E | F |
| Diphenylmethane diisocyanate | Bayer (Mondur) | 10.0 | 12.3 | 10.0 | 10.0 | 12.7 | 12.5 | 10.0 |
| PPG 1000 Mw | Arch (Poly-G) | 15.0 | 25.7 | 15.0 | 15.0 | 24.8 | 25.0 | 15.0 |
| PPG 2000 Mw | Arch (Poly-G) | 10.0 | 4.8 | 10.0 | 10.0 | 12.4 | - | 10.0 |
| PPG 4000 Mw | Arch (Poly-G) | - | - | - | - | - | 15.6 | - |
| Polymer A | Atofina (N/A) | 25.0 | - | - | - | - | - | - |
| Polymer B | Atofina (N/A) | - | 19.1 | - | - | - | - | - |
| Polymer C | Atofina (N/A) | - | - | 25.0 | - | - | - | - |
| Polymer D | Atofina (N/A) | - | - | - | 25.0 | 50.1 | - | - |
| Polymer E | -- | - | - | - | - | - | 11.25 | - |
| Polymer F | -- | - | - | - | - | - | 9.4 | - |
| Polymer G | Atofina (N/A) | - | - | - | - | - | - | 25.0 |
| Hydrocarbon Tackifier | Sartomer (Norsolene) | 40.0 | 38.1 | 40.0 | 40.0 | - | - | 40.0 |
| Hydrocarbon Tackifier | Eastman (Kristalex) | - | - | - | - | - | 26.25 | - |
| Viscosity in Pas | | 6.4 | 8.2 | 17.5 | 13.8 | 40 | 14 | 3.65 |
| (cps) | | (6,400) | (8,200) | (17,500) | (13,800) | (40,000) | (14,000) | (3,650) |
| (Temperature) | | (250°F) | (250°F) | (250°F) | (250°F) | (275°F) | (250°F) | (250°F) |
| | | 121°C | 121°C | 121°C | 121°C | 135°C | 121°C | 121°C |

EP 1 650 282 B1

Table 2. Block Copolymer Properties*≠

|  | Type | Mn GPC (kg/mol) Total Polymer | Mn GPC (kg/mol) Endblocks | Mn GPC (kg/mol) Midblock | PDI | Average # of hydroxyl groups per chain | Synthesis Method |
|---|---|---|---|---|---|---|---|
| Polymer A | Triblock | 32 | 6 | 26 | 1.5 | 2 | Controlled Radical |
| Polymer B | Triblock | 53.2 | 27.7 | 25.5 | 1.8 | 2 | Controlled Radical |
| Polymer C | Triblock | 39 | 14 | 25 | 1.8 | 2 | Controlled Radical |
| Polymer D | Triblock | 48 | 16 | 32 | 1.4 | 2 | Controlled Radical |
| Polymer E | Triblock | 161 | 42 | 119 | 1.05 | 0 | Anionic |
| Polymer F | Diblock | 85 | 4.4 | 80.6 | 1.2 | 0 | Anionic |
| Polymer G | Triblock | 36 | 10 | 26 | 1.5 | 0 | Controlled Radical |

*Polymers A-F all have monomer gradients between block segments that are less than 2% of the end block molecular weight with the exception of Polymer D. Polymer D has a 15% monomer gradient between block segments.
≠ All GPC data was produced using a common polystyrene standard.

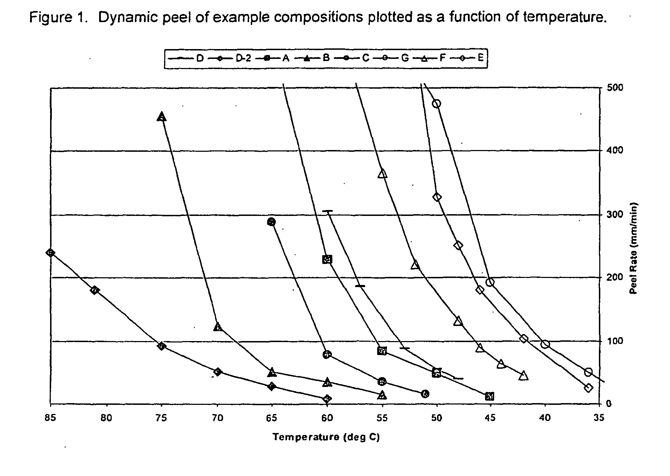

Figure 1 represents the dynamic peel data for Samples A-G over a range of temperatures: It is desirable to have dynamic peel result with low peel rates at high temperatures. When comparing two samples the sample with a lower peel rate at a given temperature is the one with a higher green strength. This data shows that high green strength reactive hot melts can be prepared using a variety of block acrylic copolymers. A simplified version of this data is given in Table 3 were the temperature that produces a peel rate of one hundred mm/min is abstracted from Figure 1. Higher peel temperatures in Table 3 indicate higher green strength adhesives.

Table 3. Dynamic peel and open time of samples A-G

| Sample | Dynamic Peel of 100 mm/min | Open Time (min) |
|---|---|---|
| A | 55.5°C | 15-18 |
| B | 68.3°C | 0.5-1.5 |
| C | 60.5°C | 2-4 |
| D | 53.4°C | 23-27 |
| D-2 | 75.5°C | >30 |
| E | 41.7°C | >60 |
| F | 46.4°C | 18-22 |
| G | 40.3°C | 18-22 |

A direct comparison of the open time and dynamic peel of several Table 1 adhesives indicate the behavior of block acrylics in reactive hot melts. Samples A and F contain very similar molecular weight polymers with and without hydroxyl functionality, respectively. Sample A has a higher viscosity than F indicating that A has reacted to form a part of the prepolymer urethane network. The green strength data represented by the dynamic peel for Sample A is significantly higher than that for Sample F with only a slight decrease in open time. These two samples illustrate the unique performance properties that can be imparted through incorporation of a small amount of functional monomer in the block acrylic copolymer.

Samples A through C represent a set of functional block acrylics with similar midblock molecular weights and different end-block molecular weights. As the high Tg MMA end-block molecular weight is decreased the dynamic peel values drop indicating a decrease in green strength. The open time of these samples have the opposite trend. Larger molecular weight end-blocks tend to create discreet high Tg domains at higher temperatures thereby limiting the cooling time that can take place before good bond formation. These samples illustrate that higher MMA molecular weight relative to the mid-block decreases the adhesive open time.

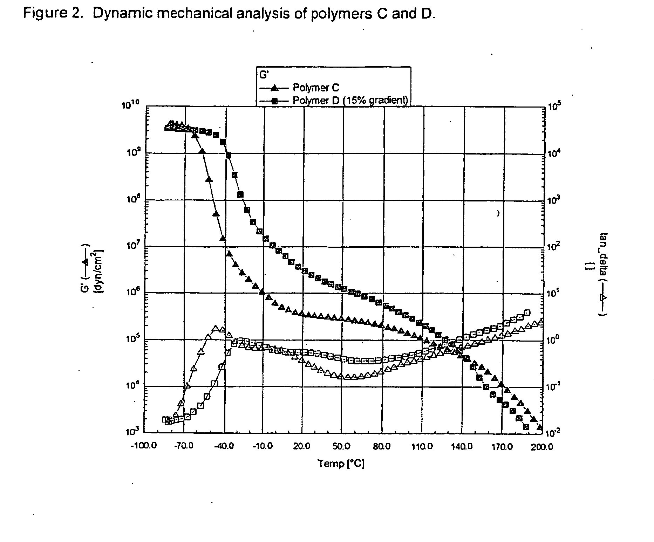

Samples C and D have similar mid to end block size ratios and similar overall molecular weight, however the D sample contains a gradient of BA that is 15% of the total MMA end-block molecular weight. The gradient on sample D is located at the transition between the BA an MMA blocks. The incorporation of gradients between the copolymer blocks impacts block phase separation and leads to longer open time adhesives with reduced green strength. The results in Table 3 show sample D has a longer open time and lower green strength than sample C. Figure 2 represents a dynamic mechanical analysis (DMA) of block acrylic polymers C and D. Despite similar molecular weights and block size ratios the mid block glass transition temperature, indicated by a relative maximum of the Tan Delta curve, is significantly impacted by increased solubility of the two blocks leading to less formation of discreet phases. Figure 2 shows a mid block Tg shift from -47°C to -28°C when a 15% gradient is introduced. This increase in mid block Tg is due to increased solubility of high Tg MMA segments in the mid block BA domains.

Samples D and D-2 are both prepared with polymer D, however D-2 does not incorporate a mid block tackifier. Comparison of D and D-2 illustrates that block acrylic formulations with no mid block tackifier component are capable of high green strength and long open times.

Sample G, the comparative sample passed on conventional reactive hot melt technology, is characterized by a lower green strength than any of the block acrylic copolymer Samples A-F. Furthermore it is illustrated that the block acrylic adhesives, Samples A-F, are capable of producing a wide range of open times at and around the value for Sample G. This range of open times for block copolymer reactive hot melts permits utility of this invention for a wide variety of bonding application requirements.

Sample E is formulated to produce a reactive hot melt with pressure sensitive hot melt characteristics. Sample E contains nonfunctional diblock and triblock acrylic polymers. The green strength of sample E is equivalent to conventional reactive hot melts, however sample E does not have a measurable open time because it remains pressure sensitive at room temperature until some amount of moisture cure take place and prohibits bonding. Formulations of block acrylic polymers with properties similar to sample E have greatly improved machining and handling time to facilitate lengthy bonding processes or high application variability while providing a green strength equivalent to conventional reactive hot melts.

Example 2. The exemplary adhesive composition of this invention listed as Sample 1 in Table 4 is capable of strong adhesion to low energy surfaces. A conventional reactive hot melt for comparative purposes will be labeled Sample 2. Sample 2 is a sample formulation which provides good adhesion for difficult to bond plastic or polymer substrates from formulations that combine polyisocyanates, polyethers, thermoplastic polymers, and tackifiers. Sample 2 contains a polyether, random acrylic copolymer, tackifier, and diphenylmethane diisocyanate (MDI). All components of these sample formulations except MDI were added to melt and mix under vacuum until homogeneous and free of moisture. Then MDI was added and polymerization allowed to proceed with mixing under vacuum until reaction is complete. The resulting pre-polymer was then placed into a container under a dry nitrogen headspace to prevent exposure to moisture.

Table 4. Reactive hot melt adhesive formulation containing block acrylic. Components are expressed in weight percent.

| Chemical | Sample 1 |
| --- | --- |
| Polypropylene Glycol | 25 |
| Block Acrylic Copolymer | 25 |
| Hydrocarbon Resin | 40 |
| Diphenylmethane diisocyanate (MDI) | 10 |

Lap shear bonds with untreated polyethylene substrates were made with adhesive Samples 1 and 2. A 12.7 μm (5 mil) film of the adhesives was applied at 121°C (250°F) on an untreated polyethylene surface and the film was brought in contact with a second untreated polyethylene surface then allowed to cool and cure under ambient conditions. Six lap shear bonds were formed with each of the two samples and pulled using an Inston at 1.27 cm (0.5 inches) per minute and the maximum bond strength was recorded. The conventional reactive hot melt (Sample 2) yielded average bond strength of 1.67 bar (24.3 PSI). The block acrylic adhesive (Sample 1) of this invention produced an average bond strength of 3.78 bar (54.8 PSI). These results exemplify the strong adhesion this invention provides to low energy surfaces like untreated polyethylene.

**Claims**

1. A moisture curable hot melt adhesive composition comprising a an isocyanate-terminated prepolymer and a block acrylic copolymer

2. The adhesive of claim 1, further comprising a tackifier.

3. The adhesive of claim 1, wherein the isocyanate terminated prepolymer is prepared by reacting a polyisocyanate with a a polyol, or a polyamino or a polymercapto-containing compound.

4. The adhesive of claim 1, which comprises a block acrylic copolymer that contains at least one functional group capable of reacting with isocyanate.

5. The adhesive of claim 4, wherein the reactive functional group is a hydroxyl group.

6. The adhesive of claim 1, wherein the block acrylic copolymer has a monomer gradient transition between blocks with a segment molecular weight greater than 2% that of the end block molecular weight.

7. The adhesive of claim 1, wherein the block acrylic copolymer is a tri-block copolymer.

8. The adhesive of claim 7, wherein the block acrylic copolymer has the formula:

$$-[A1]-[B]-[A2]-$$

wherein A1 and A2 represent acrylic block polymers having a glass transition temperature of greater than about 30°C and B represents an acrylic block polymer having a glass transition temperature of less than about 20°C.

9. The adhesive of claim 1, wherein the block acrylic copolymer is a di-block copolymer.

10. The adhesive of claim 9, wherein the block acrylic copolymer has the formula:

$$-[A]-[B]-$$

wherein A represents an acrylic block polymer having a glass transition temperature of greater than about 40°C and B represents an acrylic block polymer having a glass transition temperature of less than about 20°C.

11. The adhesive of claims 8 or 10, wherein A, A1, A2 and B are one or more block copolymer segments derived mainly from acrylic or methacrylic acid alkyl ester monomers.

12. The adhesive of claim 11, wherein A1 and A2 are selected from the group consisting of methyl methacrylate, ethyl methacrylate, n-propyl methacrylate, isobutyl methacrylate, isobornyl acrylate, isobornyl methacrylate, isobutyl methacrylate, t-butyl methacrylate, cyclohexyl methacrylate, methacrylic acid and combinations thereof.

13. The adhesive of claim 11, wherein B is selected from the group consisting of methyl acrylate, ethyl acrylate, n-propyl acrylate, isobutyl acrylate, n-butyl acrylate, n-propyl acrylate, isobutyl acrylate, sec-butyl acrylate, t-butyl acrylate, amyl acrylate , isoamyl acrylate, n-hexyl acrylate, 2-ethylhexyl acrylate, lauryl acrylate, iso-octyl acrylate, decyl methylacrylate and combinations thereof.

14. The adhesive of claim 1, wherein the block acrylic copolymer further comprises one or more non-acrylic or non-methacrylic acid alkyl ester monomers.

15. The adhesive of claim 14, wherein the one or more other non-acrylic or non-methacrylic acid alkyl ester monomers are selected from the group consisting of copolymerizable olefinic monomers, vinyl esters, vinyl ethers, styrene monomers, acrylamides, methacrylamides, fumarates, maleates, acrylonitrile, ethylene and derivatives or mixtures thereof.

16. The adhesive of claim 1, further comprising one or more of the group consisting of diluents, plasticizers, fillers, pigments, curing catalysts, dissociation catalysts, anti-oxidants, flow modifiers, dyestuffs, flame retardants, inhibitors, UV absorbers, adhesion promoters, stabilizers, and waxes.

17. The adhesive of claim 3, wherein the isocyanate terminated prepolymer is prepared by reacting a polyisocyanate with a polyol which is selected from the group consisting of polyhydroxy ethers (substituted or unsubstituted polyalkylene ether glycols or polyhydroxy polyalkylene ethers), polyhydroxy polyesters, the ethylene or propylene oxide adducts of polyols and the monosubstituted esters of glycerol as well as mixtures thereof.

18. The adhesive of claim 2, wherein the tackifier includes any compatible resins or mixtures from the group consisting of (1) natural or modified rosins, (2) glycerol and pentaerythritol esters of natural or modified rosins, (3) copolymers and homopolymers of natural or modified terpenes and aromatic monomers, phenol and hydrogenated derivatives thereof, (4) aliphatic petroleum hydrocarbon and hydrogenated derivatives thereof, (5) alicyclic petroleum hydrocarbon resins and the hydrogenated derivatives thereof; (6) aliphatic/ aromatic or cycloaliphaticlaromatic copolymers and their hydrogenated derivatives; and (7) aromatic resins.

19. The adhesive of claim 1, wherein the. block acrylic copolymer is prepared by controlled radical polymerization.

20. A method of improving the green strength or open time of a moisture curable hot melt adhesive formulation comprising adding an effective amount of one or more acrylic block copolymers to the an adhesive formulation comprising an isocyanate-terminated prepolymer.

**Patentansprüche**

1. Feuchtigkeitshärtende Schmelzklebstoff-Zusammensetzung umfassend ein Isocyanat-terminiertes Vorpolymer und ein Block-Acryl-Copolymer.

2. Klebstoff nach Anspruch 1, ferner umfassend einen Klebrigmacher.

3. Klebstoff nach Anspruch 1, wobei das Isocyanat-terminierte Vorpolymer durch Reagieren eines Polyisocyanats mit einem Polyol oder einer Polyamino oder einer Polymercapto enthaltenden Verbindung hergestellt ist.

4. Klebstoff nach Anspruch 1, welcher ein Block-Acryl-Copolymer umfasst, das mindestens eine funktionelle Gruppe enthält, die mit Isocyanat reagieren kann.

5. Klebstoff nach Anspruch 4, wobei die reaktive funktionelle Gruppe eine Hydroxylgruppe ist.

6. Klebstoff nach Anspruch 1, wobei das Block-Acryl-Copolymer einen Monomergradienten-Übergang zwischen Blök-ken mit einem Segment-Molekulargewicht aufweist, das größer als 2% des Endblock-Molekulargewichts ist.

7. Klebstoff nach Anspruch 1, wobei das Block-Acryl-Copolymer ein Triblockcopolymer ist.

8. Klebstoff nach Anspruch 7, wobei das Block-Acryl-Copolymer folgende Formel aufweist:

$$-[A1]-[B]-[A2]-$$

wobei A1 und A2 Acryl-Blockpolymere mit einer Glasübergangstemperatur über ungefähr 30°C repräsentieren und B ein Acryl-Blockpolymer mit einer Glasübergangstemperatur unter ungefähr 20°C repräsentiert.

9. Klebstoff nach Anspruch 1, wobei das Block-Acryl-Copolymer ein Diblockcopolymer ist.

10. Klebstoff nach Anspruch 9, wobei das Block-Acryl-Copolymer folgende Formel aufweist:

## -[A]-[B]-

wobei A ein Acryl-Blockpolymer mit einer Glasübergangstemperatur über ungefähr 40°C repräsentiert und B ein Acryl-Blockpolymer mit einer Glasübergangstemperatur unter ungefähr 20°C repräsentiert.

11. Klebstoff nach Anspruch 8 oder 10, wobei A, A1, A2 und B ein oder mehrere Blockcopolymer-Segmente sind, die hauptsächlich von Acryl- oder Methacrylsäure-Alkylestermonomeren abgeleitet sind.

12. Klebstoff nach Anspruch 11, wobei A1 und A2 ausgewählt sind aus der Gruppe bestehend aus Methylmethacrylat, Ethylmethacrylat, n-Propylmethacrylat, Isobutylmethacrylat, Isobornylacrylat, Isobornylmethacrylat, Isobutylmethacrylat, t-Butylmethacrylat, Cyclohexylmethacrylat, Methacrylsäure und Kombinationen davon.

13. Klebstoff nach Anspruch 11, wobei B ausgewählt ist aus der Gruppe bestehend aus Methylacrylat, Ethylacrylat, n-Propylacrylat, Isobutylacrylat, n-Butylacrylat, n-Propylacrylat, Isobutylacrylat, sec-Butylacrylat, t-Butylacrylat, Amylacrylat, Isoamylacrylat, n-Hexylacrylat, 2-Ethylhexylacrylat, Laurylacrylat, Isooctylacrylat, Decylmethylacrylat und Kombinationen davon.

14. Klebstoff nach Anspruch 1, wobei das Block-Acryl-Copolymer ferner ein oder mehrere Nicht-Acryl- oder Nicht-Methacrylsäure-Alkylestermonomere umfasst.

15. Klebstoff nach Anspruch 14, wobei das eine oder die mehreren Nicht-Acryl-oder Nicht-Methacrylsäure-Alkylestermonomere ausgewählt sind aus der Gruppe bestehend aus copolymerisierbaren Olefinmonomeren, Vinylestern, Vinylethern, Styrolmonomeren, Acrylamiden, Methacrylamiden, Fumaraten, Maleaten, Acrylnitril, Ethylen und Derivativen oder Mischungen davon.

16. Klebstoff nach Anspruch 1, ferner umfassend eines oder mehrere aus der Gruppe bestehend aus Verdünnungsmitteln, Weichmachern, Füllstoffen, Pigmenten, Härtungskatalysatoren, Dissoziationskatalysatoren, Antioxidationsmitteln, Fließmodifikatoren, Farbstoffen, Flammhemmern, Inhibitoren, UV-Absorbern, Haftvermittlern, Stabilisatoren und Wachsen.

17. Klebstoff nach Anspruch 3, wobei das Isocyanat-terminierte Vorpolymer durch Reagieren eines Polyisocyanats mit einem Polyol hergestellt ist, welches ausgewählt ist aus der Gruppe bestehend aus Polyhydroxyethern (substituierte oder nichtsubstituierte Polyalkylenetherglykole oder Polyhydroxypolyalkylenether), Polyhydroxypolyestern, den Ethylen- oder Propylenoxid-Addukten von Polyolen und den monosubstituierten Estern von Glycerin sowie Mischungen davon.

18. Klebstoff nach Anspruch 2, wobei der Klebrigmacher irgendwelche verträgliche Harze oder Mischungen aus der Gruppe bestehend aus (1) natürlichen oder modifizierten Kolophoniumharzen, (2) Glycerin- und Pentaerythritolestern von natürlichen oder modifizierten Kolophoniumharzen, (3) Copolymeren und Homopolymeren von natürlichen oder modifizierten Terpenen und aromatischen Monomeren, Phenol und hydrierten Derivaten davon, (4) aliphatischem Erdölkohlenwasserstoff und hydrierten Derivaten davon, (5) alicyclischen Erdölkohlenwasserstoff-Harzen und den hydrierten Derivaten davon; (6) aliphatischen/aromatischen oder cycloaliphatischen/aromatischen Copolymeren und deren hydrierten Derivaten; und (7) aromatischen Harzen umfasst.

19. Klebstoff nach Anspruch 1, wobei das Block-Acryl-Copolymer durch kontrollierte radikalische Polymerisation hergestellt ist.

20. Verfahren zur Verbesserung der Grünfestigkeit oder Offenzeit einer feuchtigkeitshärtenden Schmelzklebstoff-Zusammensetzung, umfassend das Zusetzen einer wirksamen Menge eines oder mehrerer Acryl-Blockcopolymere zu einer Klebstoffformulierung, die ein Isocyanat-terminiertes Vorpolymer umfasst.

## Revendications

1. Composition d'adhésif thermofusible durcissant à l'humidité comprenant un prépolymère à terminaison isocyanate et un copolymère acrylique séquencé.

**2.** Adhésif selon la revendication 1, comprenant en outre un agent poisseux.

**3.** Adhésif selon la revendication 1, dans lequel on prépare le prépolymère à terminaison isocyanate en faisant réagir un polyisocyanate avec un polyol ou avec un composé contenant un groupe polyamino ou avec un composé contenant un groupe polymercapto.

**4.** Adhésif selon la revendication 1, qui comprend un copolymère acrylique séquencé qui contient au moins un groupe fonctionnel capable de réagir avec un groupe isocyanate.

**5.** Adhésif selon la revendication 4, dans lequel le groupe fonctionnel réactif est un groupe hydroxyle.

**6.** Adhésif selon la revendication 1, dans lequel le copolymère acrylique séquencé possède une transition de monomères à gradient entre des séquences avec un poids moléculaire de segment supérieur à 2 % au poids moléculaire de la séquence finale.

**7.** Adhésif selon la revendication 1, dans lequel le copolymère acrylique séquencé est un copolymère triséquencé.

**8.** Adhésif selon la revendication 7, dans lequel le copolymère acrylique séquencé répond à la formule :

$$-[A1]-[B]-[A2]-$$

dans laquelle A1 et A2 représentent des polymères séquencés acryliques possédant une température de transition vitreuse supérieure à environ 30°C et B représente un polymère séquencé acrylique possédant une température de transition vitreuse inférieure à environ 20°C.

**9.** Adhésif selon la revendication 1, dans lequel le copolymère acrylique séquencé est un copolymère biséquencé.

**10.** Adhésif selon la revendication 9, dans lequel le copolymère acrylique séquencé répond à la formule :

$$-[A]-[B]-$$

dans laquelle A représente un polymère séquencé acrylique possédant une température de transition vitreuse supérieure à environ 40°C et B représente un polymère séquencé acrylique possédant une température de transition vitreuse inférieure à environ 20°C.

**11.** Adhésif selon la revendication 8 ou 10, dans lequel A, A1, A2 et B représentent un ou plusieurs segments de copolymère séquencé qui dérivent principalement de monomères d'esters alkyliques d'acide acrylique ou d'acide méthacrylique.

**12.** Adhésif selon la revendication 11, dans lequel A1 et A2 sont choisis parmi le groupe constitué par le méthacrylate de méthyle, le méthacrylate d'éthyle, le méthacrylate de n-propyle, le méthacrylate d'isobutyle, l'acrylate d'isobornyle, le méthacrylate d'isobornyle, le méthacrylate d'isobutyle, le méthacrylate de tert-butyle, le méthacrylate de cyclohexyle, l'acide méthacrylique et leurs combinaisons.

**13.** Adhésif selon la revendication 11, dans lequel B est choisi parmi le groupe constitué par l'acrylate de méthyle, l'acrylate d'éthyle, l'acrylate de n-propyle, l'acrylate d'isobutyle, l'acrylate de n-butyle, l'acrylate de n-propyle, l'acrylate d'isobutyle, l'acrylate de sec-butyle, l'acrylate de tert-butyle, l'acrylate d'amyle, l'acrylate d'isoamyle, l'acrylate de n-hexyle, l'acrylate de 2-éthylhexyle, l'acrylate de lauryle, l'acrylate d'isooctyle, le méthylacrylate de décyle et leurs combinaisons.

**14.** Adhésif selon la revendication 1, dans lequel le copolymère acrylique séquencé comprend en outre un ou plusieurs monomères d'esters alkyliques d'acide non acrylique ou d'acide non méthacrylique.

**15.** Adhésif selon la revendication 14, dans lequel lesdits un ou plusieurs autres monomères d'esters alkyliques d'acide non acrylique ou d'acide non méthacrylique sont choisis parmi le groupe constitué par des monomères oléfiniques copolymérisables, des esters vinyliques, des éthers vinyliques, des monomères de styrène, des acrylamides, des méthacrylamides, des fumarates, des maléates, l'acrylonitrile, l'éthylène et leurs dérivés ou leurs mélanges.

16. Adhésif selon la revendication 1, comprenant en outre un ou plusieurs membres du groupe constitué par des diluants, des plastifiants, des matières de charge, des pigments, des catalyseurs du durcissement, des catalyseurs de dissociation, des antioxydants, des modificateurs de l'écoulement, des colorants, des retardateurs des flammes, des inhibiteurs, des absorbants du rayonnement ultraviolet, des promoteurs de l'adhérence, des stabilisateurs et des cires.

17. Adhésif selon la revendication 3, dans lequel on prépare le prépolymère à terminaison isocyanate en faisant réagir un polyisocyanate avec un polyol qui est choisi parmi le groupe constitué par des éthers polyhydroxyliques (des éthers de polyalkylèneglycols ou des éthers de polyhydroxypolyalkylènes substitués ou non substitués), des polyesters polyhydroxylés, les adduits d'oxyde d'éthylène ou d'oxyde de propylène de polyols et les esters monosubstitués du glycérol, ainsi que leurs mélanges.

18. Adhésif selon la revendication 2, dans lequel l'agent poisseux englobe n'importe quelle résine compatible ou n'importe quel mélange compatible du groupe constitué par (1) des colophanes naturelles ou modifiées, (2) des esters de glycérol et de pentaérythritol de colophanes naturelles ou modifiées, (3) des copolymères et des homopolymères de terpènes naturels ou modifiés et de monomères aromatiques, du phénol ainsi que ses dérivés hydrogénés, (4) des hydrocarbures de pétrole aliphatiques et leurs dérivés hydrogénés, (5) des résines d'hydrocarbure de pétrole alicyclique et leurs dérivés hydrogénés, (6) des copolymères aliphatiques/aromatiques ou cycloaliphatiques/aromatiques et leurs dérivés hydrogénés, et (7) des résines aromatiques.

19. Adhésif selon la revendication 1, dans lequel on prépare le copolymère acrylique séquencé via une polymérisation radicalaire contrôlée.

20. Procédé d'amélioration de la résistance à l'état non durci ou du temps ouvert d'une formulation d'adhésif thermofusible durcissant à l'humidité, comprenant l'addition d'une quantité efficace d'un ou de plusieurs copolymères séquencés acryliques à la formulation de l'adhésif comprenant un prépolymère à terminaison isocyanate.

Figure 1. Dynamic peel of example compositions plotted as a function of temperature.

Figure 2.  Dynamic mechanical analysis of polymers C and D.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4820368 A
- US 6255448 B
- EP 1142913 A
- JP KOKAI1130222617 A
- US 5679762 A
- EP 0349270 B1
- US 6881805 B
- WO 2004055071 A
- US 5866656 A

### Non-patent literature cited in the description

- The Polyurethanes Book. John Wiley & Sons, 2002, 84
- **B. Cassel ; M. P. DiVito.** Use of DSC To Obtain Accurate Thermodynamic and Kinetic Data. American Laboratory, January 1994, 14-19
- **B. Wunderlich.** Thermal Analysis. Academic Press, Inc, 1990
- **P. Mancinelli.** *Materiaux et Techniques,* March 1990, 41-46